# EUROPEAN PATENT APPLICATION

(11) **EP 4 712 022 A1**
(43) Date of publication of application: **18.03.2026**
(21) Application number: 24200696.3
(22) Date of filing: 17.09.2024
(51) Int. Cl.: G06T 7/33, G06V 10/82, G06T 7/73

(54) **METHOD AND APPARATUS FOR DETECTING TARGET OBJECT, ELECTRONIC DEVICE, AND COMPUTER STORAGE MEDIUM**

(71) Applicant: Siemens Aktiengesellschaft, 80333 München (DE)
(72) Inventor: YAO, Wei, Chaoyang, 100025 (CN); LI, Dong, Beijing, 100025 (CN); ZHANG, Chuan Yu, Beijing, 100028 (CN)
(74) Representative: Isarpatent

(57) **Abstract**

The present disclosure relates to a method and apparatus for detecting a target object, an electronic device, and a computer storage medium. The method includes: acquiring a target image and a first global point cloud of the target object; detecting, by using a detection model, first key regions; acquiring first regional point clouds corresponding to the first key regions; respectively calculating coordinates of respective midpoints in the first key regions; calculating a first transformation matrix based on coordinates of each of the midpoints and coordinates of reference midpoints; transforming, by using the first transformation matrix, the first global point cloud to obtain a second global point cloud; determining second key regions respectively corresponding to the first key regions; determining coordinates of respective midpoints and second sub point clouds in the second key regions; calculating a second transformation matrix based on reference point clouds and the second sub point clouds; calculating a third transformation matrix based on the second transformation matrix and the first transformation matrix; and determining pose information of a robot grabbing the target object based on reference pose information of a reference object and the third transformation matrix.

## Description

### TECHNICAL FIELD

The present disclosure relates to the field of image processing, and in particular, to a method and apparatus for detecting a target object, an electronic device, and a computer storage medium.

### BACKGROUND

In the industrial field, there are increasing use-cases to pick and place objects according to point clouds and AI. In a digitalized factory, there will often be the following problems:
1. A robot task is low in accuracy and slow in pose estimation.
2. Large AI models are difficult to work at an industrial edge device. They usually occupy excessive resources, affecting other applications of the industrial edge device. Besides, the large AI models are low in speed of reasoning.

Two scenes and problems therein are illustrated below.

Scene 1: For pose estimation solutions in robot pick and place tasks, algorithms such as 4PCSs (4-points congruent sets) and ICPs (Iterative Closest Points) may work well if scene point clouds and reference point clouds are considerably overlapped. However, in many real cases, there are without or less overlapped point clouds.

There are the following problems: If there are without or less overlapped point clouds, 4PCSs generally work slowly and are low in accuracy, which cannot satisfy the accuracy and speed in the industrial field.

Scene 2: In general, transformer-based AI models have better accuracy on target detection. Therefore, more and more AI models are used for detecting workpieces in a factory.

There are the following problems: But these transformer-based AI models are too large to work at industrial edge devices. Besides, they are also slow in speed of reasoning.

In the digital factory, there are some solutions to detect workpieces for picking and placing, such as AI only, point cloud only, or AI, point cloud and iterative closest point together.

For the AI only, image semantic segmentation (patent number: US9865042B2) and Mask-RCNN are the solutions to detect the target to deal with a background clutter. But it is too low in accuracy for target location, and cannot be used for the robot pick and place tasks. Besides, it is also difficult to work at the industrial edge devices.

Segmenting objects by locations (SOLO) is another AI solution to detect the target. It's faster to detect the object than Mask-RCNN and perform well on a large target. But it is difficult for SOLO to detect a small target or feature, such as a workpiece on a PLC, or to work at the industrial edge devices.

For point clouds, 4PCSs (4-points congruent sets) in a point cloud library, are a solution of open source and may detect the target based on a training model faster, but it doesn't perform well in case of a less overlapping region of two point clouds.

### SUMMARY

A brief overview of the present invention is given below to provide a basic understanding of certain aspects of the present invention. It should be understood that this summary is not an exhaustive overview of the present invention. It is not intended to determine key or important parts of the present invention, nor is it intended to limit the scope of the present invention. The purpose is merely to present some concepts in a simplified form as a prelude to the more detailed description that is discussed later.

In view of this, embodiments of this application are intended to provide a method and apparatus for detecting a target object, an electronic device, and a computer storage medium to solve the problem of relatively low detection efficiency in the prior art.

In a first aspect, an embodiment of this application provides a method for detecting a target object, including:
acquiring a target image and a first global point cloud of the target object based on a picture of the target object;
detecting, by using a predetermined detection model, at least one first key region from the target image;
acquiring first regional point clouds respectively corresponding to the at least one first key region from the first global point cloud;
respectively determining coordinates of respective midpoints in the at least one first key region based on the first regional point clouds;
calculating a first transformation matrix based on coordinates of each of the midpoints and coordinates of reference midpoints, where the reference midpoints are respective midpoints in reference key regions respectively corresponding to the at least one first key region in a reference image of a predetermined reference object;
transforming, by using the first transformation matrix, the first global point cloud to obtain a second global point cloud;
determining at least one second key region respectively corresponding to the at least one first key region from the second global point cloud;
determining coordinates of respective midpoints and second sub point clouds in the at least one second key region;
calculating a second transformation matrix based on reference point clouds and the second sub point clouds, where the reference point clouds are reference point clouds of the predetermined reference object;
calculating a third transformation matrix based on the second transformation matrix and the first transformation matrix; and
determining pose information of a robot grabbing the target object based on reference pose information of the predetermined reference object and the third transformation matrix.

The method for detecting a target object according to the embodiment of the present disclosure may determine the pose of the robot grabbing the target object more quickly and accurately.

Optionally, prior to executing the operation of acquiring an image and a first global point cloud of the target object based on a picture of the target object, the method further includes: a step of determining reference information of the reference object, where the reference information includes: the coordinates of the respective reference midpoints in the reference key region, the reference point clouds, and the reference pose information, the step of determining the reference information of the reference object including:
acquiring a reference picture of the reference object, and acquiring a reference image and a reference global point cloud of the reference object based on the reference picture;
detecting, by using the predetermined detection model, at least one reference key region from the reference image;
acquiring reference regional point clouds respectively corresponding to the at least one reference key region from the reference global point cloud;
respectively determining coordinates of respective reference midpoints in the at least one reference key region based on the reference regional point cloud;
determining the reference point cloud based on the coordinates of the reference midpoints; and
dragging the robot to a pose in which the robot is capable of grabbing the reference object to record information of the current pose as the reference pose information.

Optionally, the determining the reference point clouds based on the coordinates of the reference midpoints includes:
setting a first radius r1 and a second radius r2 as required, where the first radius r1 is less than the second radius r2; and
by taking each of the reference midpoints as a center of a circle, determining all points between a circle taking the first radius r1 as a radius and a circle taking the second radius r2 as a radius and the reference midpoint to be the reference point clouds corresponding to the reference midpoint.

In this way, the size of the reference point clouds may be changed flexibly by selecting different sizes of the first radius and the second radius.

Optionally, prior to executing the operation of acquiring an image and a first global point cloud of the target object based on a picture of the target object, the method further includes: a training process where training is performed to obtain the detection model, the training process including:
receiving the image of the object as a training sample;
segmenting the image into a plurality of patches with a fixed size, and adding location embedding to each of the patch;
inputting the patches into a Transformer encoder for training, where the Transformer encoder is based on a self-attention mechanism with a sliding window;
inputting an output result to an MLP for calculating; and
generating masks of the key regions of the object and corresponding classifications.

In this way, the calculated quantity of the model can be greatly reduced by using the self-attention mechanism with the sliding window. Because a lightweight model is used, a mask region can be detected faster. Because the self-attention mechanism with sliding window may better balance the relation between the feature and distance, the position and classification of the target object can be detected more accurately.

Optionally, in the self-attention mechanism with the sliding window, in a case where a feature length is n, a window size is set to n/2 and a step length is adjusted to n/4.

In the embodiment of the present disclosure, the size of the window and the step length may be changed flexibly according to an actual demand, for example, the size of the target object.

Optionally, the calculating a second transformation matrix based on reference point clouds and the second sub point clouds includes: calculating, by using a 4PCS algorithm or a 4PCS-based morphing algorithm, the second transformation matrix that is transformed between the second sub point clouds and the reference point clouds.

In the embodiment of the present disclosure, the calculated quantity may be reduced by extracting the key regions and only calculating the point clouds in the key regions, so that the calculating speed is higher. By transforming the point clouds of the target object, the point clouds and the reference point clouds have considerably overlapping regions. The calculated accuracy of the transformation matrix is higher by using the 4PCS algorithm or a 4PCS-based morphing algorithm (for example, super 4PCS).

Optionally, the third matrix is equal to the second matrix multiplied by the first matrix.

Optionally, the second pose information is equal to the third transformation matrix multiplied by the reference pose information.

The method for detecting the target object provided in the embodiment of the present disclosure has higher detection accuracy, and moreover, the method for detecting the target object provided in the embodiment of the present disclosure also has better robustness in the case of noise, clutter, and partial occlusion.

According to another aspect of the present disclosure, provided is an apparatus for detecting a target object, including:
a target image and point cloud acquisition unit, configured to acquire a target image and a first global point cloud of the target object based on a picture of the target object;
a first key region detection unit, configured to detect, by using a predetermined detection model, at least one first key region from the target image;
a first regional point cloud acquisition unit, configured to acquire first regional point clouds respectively corresponding to the at least one first key region from the first global point cloud;
a first midpoint coordinate calculation unit, configured to respectively calculate coordinates of respective midpoints in the at least one first key region based on the first regional point clouds;
a first transformation matrix calculation unit, configured to calculate a first transformation matrix based on coordinates of each of the midpoints and coordinates of reference midpoints, where the reference midpoints are respective midpoints in reference key regions respectively corresponding to the at least one first key region in a reference image of a predetermined reference object;
a second global point cloud acquisition unit, configured to transform, by using the first transformation matrix, the first global point cloud to obtain a second global point cloud;
a second key region detection unit, configured to determine at least one second key region respectively corresponding to the at least one first key region from the second global point cloud;
a second coordinate and point cloud determination unit, configured to determine coordinates of respective midpoints and second sub point clouds in the at least one second key region;
a second transformation matrix calculation unit, configured to calculate a second transformation matrix based on reference point clouds and the second sub point clouds, where the reference point clouds are reference point clouds of the predetermined reference object;
a third transformation matrix calculation unit, configured to calculate a third transformation matrix based on the second transformation matrix and the first transformation matrix; and
a pose determination unit, configured to determine pose information of a robot grabbing the target object based on reference pose information of the predetermined reference object and the third transformation matrix.

According to another aspect of the present disclosure, provided is an electronic device, including a processor, a memory, a communication interface, and a communication bus, where the processor, the memory, and the communication interface intercommunicate with each other through the communication bus; the memory is used for storing at least one executable instruction, where the executable instruction causes the processor to execute the method for detecting a target object according to the first aspect.

According to another aspect of the present disclosure, provided is a computer storage medium, having a computer program store thereon, where the computer program, when executed by a processor, implements the method for detecting a target object according to the first aspect or any one embodiment in the first aspect.

According to another aspect of the present disclosure, provided is computer program product, including a computer program, where the computer program, when executed by a processor, implements the method for detecting a target object according to the first aspect or any one embodiment in the first aspect.

### BRIEF DESCRIPTION OF THE DRAWINGS

Referring to the descriptions of the embodiments of the present disclosure in combination with the accompanying drawings, the foregoing and other objectives, features, and advantages of the present invention may be more easily understood. Components in the accompanying drawings are merely used for demonstrating the principle of the present invention. In the accompanying drawings, the same or similar technical features or components may be represented by using the same or similar reference numerals. In the accompanying drawings:
FIG. 1 is a flowchart of an exemplary process of a method for detecting a target object provided according to an embodiment of the present disclosure;
FIG. 2 is a flowchart of an exemplary process where reference information of a reference object is determined;
FIG. 3A is a schematic simplified diagram of a self-attention mechanism;
FIG. 3B is a schematic simplified diagram of a self-attention mechanism with a sliding window;
FIG. 4 is a schematic diagram of a workpiece;
FIG. 5 is a schematic enlarged diagram of a reference key region;
FIG. 6 is a schematic diagram of a transformation relation among a reference point cloud, a first global point cloud, and a second global point cloud;
FIG. 7 is a block diagram of an exemplary configuration of an apparatus for detecting a target object according to another embodiment of the present disclosure; and

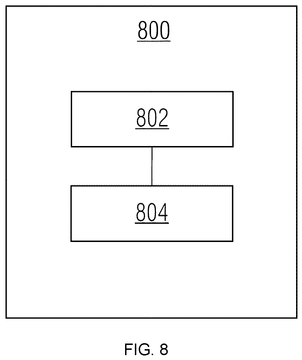

FIG. 8 is a block diagram of an electronic device for detecting a target object according to an embodiment of the present disclosure.

### DETAILED DESCRIPTION

The subject matter described herein will now be discussed with reference to exemplary implementations. It should be understood that, discussion of the implementations is merely intended to make a person skilled in the art better understand and implement the subject matter described herein, and is not intended to limit the protection scope as defined in the claims, the applicability, or examples. Changes may be made to the functions and arrangements of the discussed elements without departing from the protection scope of the content of the present disclosure. Various processes or components may be omitted, replaced, or added in each example according to requirements. For example, the described method may be executed according to a sequence different from the sequence described herein, and steps may be added, omitted, or combined. In addition, features described in some examples may also be combined in other examples.

As used herein, the term "include" and variants thereof represent open terms, and mean "include but is not limited to". The term "based on" represents "based at least in part on". The terms "one embodiment" and "an embodiment" represent "at least one embodiment". The term "another embodiment" represents "at least one other embodiment". The terms "first", "second", and the like may represent different objects or the same object. Other definitions may be included explicitly or implicitly in the following. Unless otherwise clearly specified, the definition of one term is consistent in the entire specification.

In the industrial field, workpiece picking and placing for self-assembly, automatic testing of a PCB, classification of electrical waste, and the like all rely on faster and more accurate pose estimation, and in the case of noise, clutter or partial occlusion, it is expected to have a lightweight AI model capable of operating at industrial edge devices.

In view of this, the present disclosure proposes a method for detecting a target object, which may provide a solution for detecting rotation and translation of a workpiece more quickly and accurately for picking and placing tasks of a robot.

Specific implementations of the embodiments of the present disclosure will be further described below in conjunction with the accompanying drawings of the embodiments of the present disclosure.

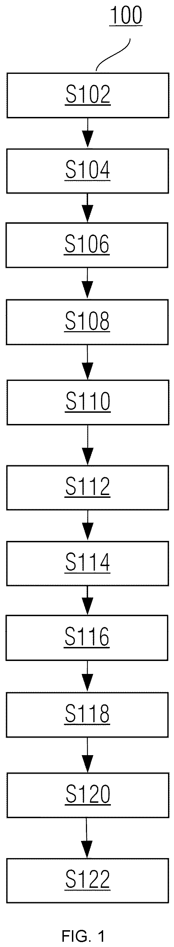

FIG. 1 is a flowchart of an exemplary process of a method 100 for detecting a target object provided according to an embodiment of the present disclosure. As shown in FIG. 1, the method includes the following steps:
Step S102: An image and a first global point cloud PC1 of the target object are acquired based on a picture of the target object.

For example, in a task scene where an intelligent robot picks a workpiece, a picture of a target workpiece may be acquired by devices such as a laser scanner, a structured light scanner, and a stereo camera, and an image of the target object may be acquired from the picture. The picture may include more than one object, and the image of one of the target objects may be extracted to execute subsequent operations. The image is processed and analyzed through professional software to obtain the point cloud of the target object. The point cloud of the target object in the present disclosure is referred to as the first global point cloud. In the embodiment of the present disclosure, a specific way used for acquiring the picture of the target object and for acquiring the image and the point cloud of the target object from the picture is not defined.

Step S104: At least one first key region is detected from the target image by using a predetermined detection model.

In the present disclosure, the key regions in the target image are detected by using an AI model. The AI model may be either an existing AI model pre-stored in a system or an AI detection model pre-trained. One or more key regions in the image may be detected by using the detection model, and the key regions are usually regions including key features. Specific quantities of key features and key regions both may be self-defined by a user.

According to an embodiment of the present disclosure, provided is an AI detection model based on Vision in Transformer (VIT). The model, trained based on the self-attention mechanism with the sliding window, is a lightweight AI model, which, therefore, may operate at the edge devices. A specific training process of the detection model according to the embodiment of the present disclosure includes the following:
the image of the object is received as a training sample;
the image is segmented into a plurality of patched with a fixed size (for example 16*16), and location embedding is added to each of the patch;
the patches are inputted into a Transformer encoder for training, where the Transformer encoder is based on a self-attention mechanism with a sliding window;
an output result is inputted to an MLP for calculating; and
masks of the key regions of the object and corresponding classifications are generated.

In the training process of the detection model according to the embodiment of the present disclosure, the self-attention mechanism with the sliding window is used, so that the calculated quantity can be reduced, and the efficiency is improved.

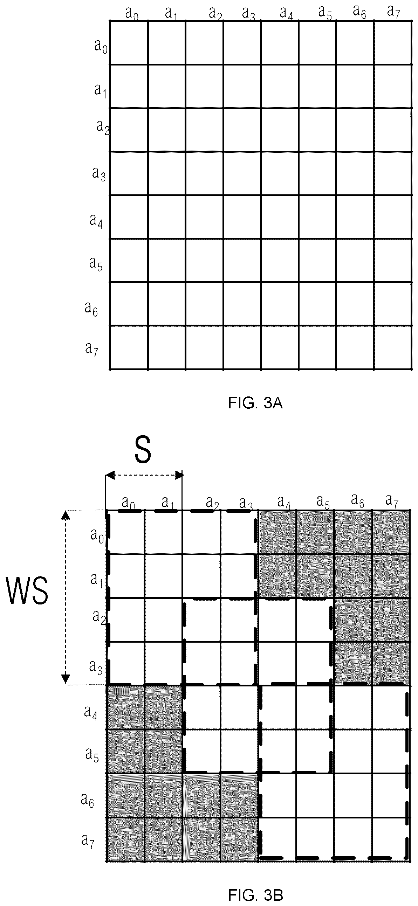

FIG. 3A is a schematic simplified diagram of a self-attention mechanism in the prior art. It can be seen that in the self-attention mechanism, if the feature length is n, the weight quantity is n².

FIG. 3B is a schematic simplified diagram of a self-attention mechanism with a sliding window used in the method in the embodiment of the present disclosure. In FIG. 3B, the feature length is n (n=8 in FIG. 3B), the window size WS is n/2 (i.e., a 4*4 dashed box in FIG. 3B), and the step length S is adjusted to n/4 (i.e., the window moves toward a bottom-right side by 2 every time). The weight quantity is (n/2)² + (n/2)² + (n/2)² - 2 * (n/4)² = (5/8) * n2.

It can be seen that compared with the self-attention mechanism shown in FIG. 3A, for the self-attention mechanism with the sliding window shown in FIG. 3B, in the case of the feature length n=8, the calculated quantity may be decreased by 37.5%.

In FIG. 3A and FIG. 3B, taking the feature length n=8 as an example, in an actual application, the feature length n of an appropriate size may be set according to an actual condition, and the size of the window and the step length may be adjusted flexibly as required. The window may slide only along an X direction or a Y direction and may slide along both X and Y directions. The step length in each direction may be the same or different.

The masks of the key regions generated by the detection models are the key regions, and corresponding classifications are names of the regions, for example, A, B, and C.

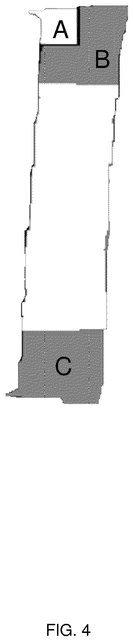

FIG. 4 is a schematic diagram of a workpiece. As shown in FIG. 4, 3 key regions on the workpiece are detected by using the AI model, which are respectively, regions A, B, and C.

Taking the 3 key regions as an example hereinafter, a person skilled in the art may understand that the quantity of the key regions to be detected is set according to a requirement on characteristics such as the size, shape, and the like of the workpiece, and is not limited to 3.

In step S106, first regional point clouds PC_{A1}, PC_{B1}, and PC_{C1} respectively corresponding to the first key regions A1, B1, and C1 are acquired from the first global point cloud PC1. Reference signs such as A1, B1, and C1, and PC_{A1}, PC_{B1}, and PC_{C1} are only examples for clearer description and are not shown in the accompanying drawings.

Step S108: Coordinates of midpoints in the respective first key regions are respectively determined based on the first regional point clouds PC_{A1}, PC_{B1}, and PC_{C1}.

Through the step, the respective midpoints of the first key regions A1, B1, and C1 may be determined and are respectively represented as mₐ₁, m_{b1}, and m_{c1}. Moreover, the coordinates of the midpoints obtained are respectively 'xₐ₁, yₐ₁, zₐ₁', 'x_{b1}, y_{b1}, z_{b1}', and 'x_{c1}, y_{c1}, z_{c1}'. The midpoints may be geometric centers, centers of gravity, and the like of the key regions, and are collectively referred to as the midpoints in the present disclosure. A person skilled in the art may select a method for determining the midpoints as required.

Step S110: A first transformation matrix is calculated based on coordinates of each of the midpoints and coordinates of reference midpoints.

The reference midpoints here are respective midpoints in reference key regions respectively corresponding to the first key regions A1, B1, and C1 in the reference image of the predetermined reference object.

In the technical solution according to the embodiment of the present disclosure, the information of the target object is compared with the reference information of the reference object to execute subsequent operations. Therefore, the related reference information of one reference object is determined first. The reference information of the reference object may be predetermined and stored in the system, and may also be obtained by executing the steps of determining the reference information of the reference object before executing the step S102. In a specific embodiment, the reference information may specifically include: information of the coordinates of the respective reference midpoints in the reference key region, the reference point clouds, and the reference pose.

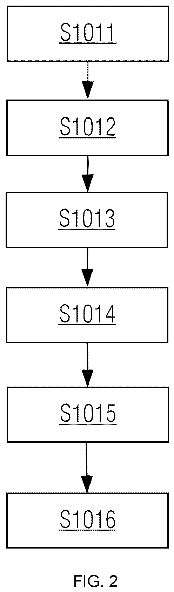

FIG. 2 is a flowchart of an exemplary process where reference information of a reference object is determined. As shown in FIG. 2, the determining the reference information of the reference object may include the following steps:
Step S1011: A reference picture of the reference object is acquired, and a reference image and a reference global point cloud PCref of the reference object are acquired based on the reference picture.

In general, the reference object is a single object placed on a worktable as the reference object and is photographed. The method for acquiring the reference image and the reference global point cloud is as same as the step S102, which is not repeatedly described here.

Step S1012: At least one reference key region is detected from the reference image by using the predetermined detection model.

In the step, the used detection model is the same as the detection model in step S102. Three reference key regions A, B, and C in the reference image can be detected by using the detection model.

Step S1013: Reference regional point clouds PC_{A}, PC_{B}, and PCc respectively corresponding to the reference key regions A, B, and C are acquired from the reference global point cloud PCref.

Step S1014: Coordinates of respective reference midpoints in the at least one reference key region are respectively determined based on the reference regional point cloud.

Through the step, the midpoints of the reference key regions A, B, and C may be determined and are respectively represented as mₐ, m_{b}, and m_{c}. The coordinates of the midpoints are respectively 'xₐ, yₐ, zₐ', 'x_{b}, y_{b}, z_{b}', and 'x_{c}, y_{c}, z_{c}'.

Step S1015: The reference point clouds PC_{a-ref}, PC_{b-ref}, and PC_{c-ref} are determined based on the coordinates of the reference midpoints.

In a specific embodiment, the reference point clouds may be determined through the following steps.

A first radius r1 and a second radius r2 are set as required, where the first radius r1 is less than the second radius r2.

By taking each of the reference midpoints as a center of a circle, all points between a circle taking the first radius r1 as a radius and a circle taking the second radius r2 as a radius and the reference midpoint are the reference point clouds corresponding to the reference midpoint.

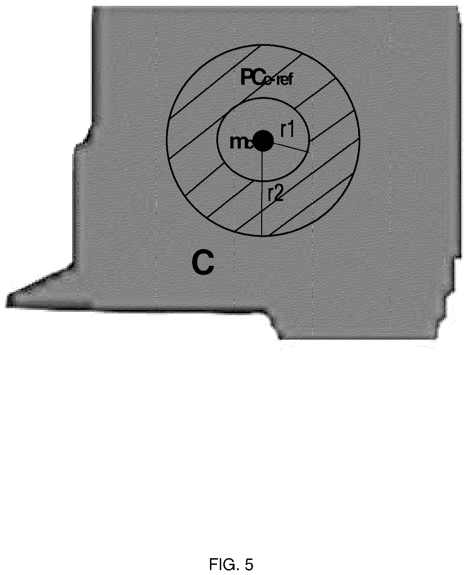

FIG. 5 is a schematic enlarged diagram of the reference key region C, where the reference point cloud of the reference key region C is shown. In FIG. 5, all points (shaded areas) between the circle taking the first radius r1 as the radius and the circle taking the second radius r2 as the radius and the reference midpoint m_{c} are the reference point cloud PC_{c-ref} corresponding to the reference midpoints.

It can be understood that in the present disclosure, the "global point cloud" refers to the point cloud of the whole object, the "regional point cloud" refers to the point cloud in the key region detected by using the detection model, and the "reference point cloud" and the "sub point cloud" hereinafter refer to the approximately annular point clouds determined by the above method.

In step S1016: The robot is dragged to a pose in which the robot is capable of grabbing the reference object to record information of the current pose as the reference pose information.

Through the above steps S1011 to S1016, the reference key regions of the reference image, the coordinate information of the reference midpoints in the reference key regions, the reference point clouds, and the reference pose information are determined. In step S110, the first transformation matrix is calculated based on the coordinates of the midpoints and the coordinates of the reference midpoints. In the following steps, other reference information will be used.

As described above, in step S110, the first transformation matrix may be calculated based on the coordinates 'xₐ₁, yₐ₁, zₐ₁', 'x_{b1}, y_{b1}, z_{b1}', and 'x_{c1}, y_{c1}, z_{c1} 'of the midpoints mₐ₁, m_{b1}, and m_{c1} in the first key regions of the target object calculated in step S108 and the coordinates 'xₐ, yₐ, zₐ', 'x_{b}, y_{b}, z_{b}', and 'x_{c}, y_{c}, z_{c}' of the respective reference midpoints in the reference key regions determined in steps S1011 to S1014. The transformation here includes rotation and translation.

The first transformation matrix is a matrix capable of transforming mₐ₁ into mₐ, transforming m_{b1} into m_{b}, and transforming m_{c1} into m_{c}. It can be understood that the first global point cloud may also be transformed by using the first transformation matrix to obtain a new global point cloud.

In step S112, the first global point cloud PC1 is transformed into the second global point cloud PC2 by using the first transformation matrix TM1.

Apparently, the second global point cloud PC2 and the reference global point cloud PCref have a considerably large overlapping region. The accuracy will be better if the overlapping point clouds are used for calculating the transformation matrixes (rotation and translation).

In step S114, the second key regions A2, B2, and C2 respectively corresponding to the first key regions A1, B1, and C1 are determined from the second global point cloud PC2.

A1, B1, and C1 are the first key regions in the first global point cloud PC1. The first global point cloud PC1 is transformed into the second global point cloud PC2, so that it is easy to acquire respectively corresponding second key regions A2, B2, and C2 from the second global point cloud PC2, which is not described in detail here.

In step S116, the coordinates of respective midpoints and second sub point clouds in the second key regions A2, B2, and C2 are determined.

Specifically, as described above, the midpoints mₐ₂, m_{b2}, and m_{c2} of the second key regions A2, B2, and C2 may be calculated with the geometric centers or centers of gravity. Based on the second global point cloud, it may be determined that the coordinates of mₐ₂, m_{b2}, and m_{c2} are respectively 'xₐ₂, yₐ₂, zₐ₂', 'x_{b2}, y_{b2}, z_{b2}', and 'x_{c2}, y_{c2}, z_{c2}'.

According to a similar method for determining the reference point clouds based on the coordinates of the reference midpoints, the second sub point clouds PCₐ₂, PC_{b2}, and PC_{c2} may be determined based on the midpoints mₐ₂, m_{b2}, and m_{c2} of the second key regions A2, B2, and C2.

In step S118, the second transformation matrix TM2 is calculated based on the reference point clouds PC_{a-ref}, PC_{b-ref}, and PC_{c-ref}, and the second sub point clouds PCₐ₂, PC_{b2}, and PC_{c2}.

Because the second global point cloud PC2 and the reference global point clouds PCref have considerably large overlapping regions, the second sub point clouds PCₐ₂, PC_{b2}, and PC_{c2} and the reference point clouds PC_{a-ref}, PC_{b-ref}, and PC_{c-ref} also have considerably large overlapping regions.

Preferably, the second transformation matrix TM2 that transforms between the reference point clouds and the second sub point clouds may be calculated by using a 4PCS (4 Point Congruent Set) algorithm. In the case that the reference point clouds and the second sub point clouds have large overlapping regions, the second transformation matrix generated by using the 4PCS algorithm has better accuracy.

In step S120, a third transformation matrix TM3 is calculated based on the second transformation matrix TM2 and the first transformation matrix TM1.

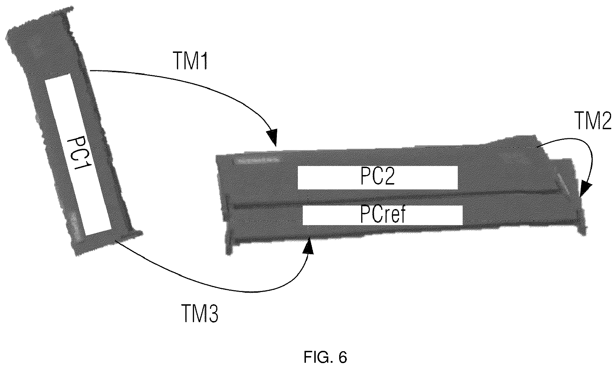

FIG. 6 is a schematic diagram of a transformation relation among the reference global point cloud PCref, the first global point cloud PC1, and the second global point cloud PC2. In can be understood that the first global point cloud PC1 is transformed into the second global point cloud PC2 by the first transformation matrix TM1; the second global point cloud PC2 and the reference global point cloud PCref have a considerably large overlapping region; the second transformation matrix TM2 may be obtained based on the second global point cloud and the reference global point cloud; letting the third transformation matrix TM3=the second transformation matrix TM2*the first transformation matrix TM1, the third transformation matrix TM3 may transform the first global point cloud PC1 into the reference global point cloud PCref, and the transformation accuracy of the third transformation matrix is higher.

In step S122, the reference pose information of the reference object is transformed by using the third transformation matrix TM3, so that the second pose information of the robot that is capable of grabbing the current target object may be obtained.

The present disclosure provides a solution for detecting rotation and transformation of a workpiece more quickly with higher accuracy, which is used for robot pick and place tasks. The pose of the robot grabbing the target object may be determined more quickly and accurately by executing the method for detecting a target object according to the embodiment of the present disclosure.

The technical solutions according to the embodiments of the present disclosure have at least one of the following technical advantages:
In the embodiment of the present disclosure, the calculated quantity may be reduced by extracting the key regions and only calculating the point clouds in the key regions, so that the calculating speed is higher.

By transforming the point clouds of the target object, the point clouds and the reference point clouds have considerably overlapping regions. The calculated accuracy of the transformation matrix is higher by using the 4PCS algorithm.

The size of the reference point clouds may be changed flexibly by selecting different sizes of the first radius and the second radius.

In the embodiments according to the present disclosure, the AI detection model and calculation of the point clouds may be deployed in a distributed manner to different industrial edge devices, and existing visual solutions or devices may also be used.

With the solutions according to the embodiments of the present disclosure, the industrial edge devices may handle industrial scenes of noise, clutter, and partial occlusion smoothly without requiring resource-intensive programming.

In the embodiments according to the present disclosure, the calculated quantity of the model may be greatly reduced by using the self-attention mechanism with the sliding window. Because a lightweight model is used, a mask region can be detected faster.

Because the self-attention mechanism with sliding window may better balance the relation between the feature and distance, the position and classification of the target object can be detected more accurately.

The size of the window and the step length may be changed flexibly according to an actual demand.

The method for detecting the target object provided in the embodiment of the present disclosure has higher detection accuracy, and moreover, the method for detecting the target object provided in the embodiment of the present disclosure also has better robustness in the case of noise, clutter, and partial occlusion.

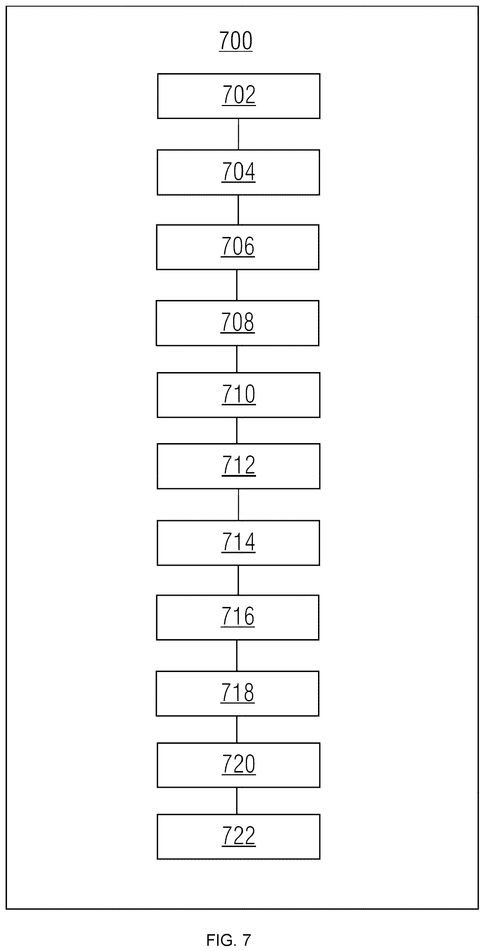

Based on the method for detecting a target object provided in any one of above embodiments, the embodiment of the present disclosure provides an apparatus for detecting a target object, as shown in FIG. 7. FIG. 7 is a block diagram of an exemplary configuration of an apparatus 700 for detecting a target object according to another embodiment of the present disclosure. The apparatus 700 is used for executing the method for detecting a target object as shown in FIG. 1.

As shown in FIG. 7, the apparatus 700 for detecting a target object includes: a target image and point cloud acquisition unit 702, a first key region detection unit 704, a first regional point cloud acquisition unit 706, a first midpoint coordinate calculation unit 708, a first transformation matrix calculation unit 710, a second global point cloud acquisition unit 712, a second key region detection unit 714, a second coordinate and point cloud determination unit 716, a second transformation matrix calculation unit 718, a third transformation matrix calculation unit 720, and a pose determination unit 722.

The target image and point cloud acquisition unit 702 is configured to acquire a target image and a first global point cloud of the target object based on a picture of the target object;
the first key region detection unit 704 is configured to detect, by using a predetermined detection model, at least one first key region from the target image;
the first regional point cloud acquisition unit 706 is configured to acquire first regional point clouds respectively corresponding to the at least one first key region from the first global point cloud;
the first midpoint coordinate calculation unit 708 is configured to respectively calculate coordinates of respective midpoints in the at least one first key region based on the first regional point clouds;
the first transformation matrix calculation unit 710 is configured to calculate a first transformation matrix based on coordinates of each of the midpoints and coordinates of reference midpoints, where the reference midpoints are respective midpoints in reference key regions respectively corresponding to the at least one first key region in a reference image of a predetermined reference object;
the second global point cloud acquisition unit 710 is configured to transform, by using the first transformation matrix, the first global point cloud to obtain a second global point cloud;
the second key region detection unit 714 is configured to determine at least one second key region respectively corresponding to the at least one first key region from the second global point cloud;
the second coordinate and point cloud determination unit 716 is configured to determine coordinates of respective midpoints and second sub point clouds in the at least one second key region;
the second transformation matrix calculation unit 718 is configured to calculate a second transformation matrix based on reference point clouds and the second sub point clouds, where the reference point clouds are reference point clouds of the predetermined reference object;
the third transformation matrix calculation unit 720 is configured to calculate a third transformation matrix based on the second transformation matrix and the first transformation matrix; and
the pose determination unit 722 is configured to determine pose information of a robot grabbing the target object based on reference pose information of the predetermined reference object and the third transformation matrix.

The apparatus for detecting a target object in the embodiment of the present disclosure is used for realizing the corresponding method for detecting a target object in the above plurality of method embodiments and has beneficial effects of the corresponding method embodiments, which are not repeatedly described here. Besides, function implementation of the modules in the apparatus for detecting a target object in the embodiment of this application may refer to the descriptions of corresponding parts in the above method embodiments, which are not repeatedly described here.

It should be noted that structures of the apparatus 700 for detecting a target object and constitutional units thereof shown in FIG. 7 are merely exemplary, and a person skilled in the art may modify the structure diagram shown in FIG. 7 as required.

Based on the method for detecting a target object described in any one of above embodiments, the embodiment of the present disclosure provides an electronic device 800. The electronic device 800 may include at least one processor 802, and the processor 802 executes at least one computer-readable instruction stored or encoded in a computer-readable storage medium (i.e., a memory 804).

It should be understood that the computer-executable instructions stored in the memory 804, when executed, cause the at least one processor 802 to perform the various operations and functions described in the foregoing embodiments of this specification in conjunction with FIG. 1 to FIG. 6.

Based on the method for detecting a target object described in any one of above embodiments, the embodiment of the present disclosure further provides a computer storage medium, having a computer program stored thereon, where the computer program, when executed by a processor, implements the method described in any one of above embodiments.

Based on the method for detecting a target object described in any one of above embodiments, the embodiment of the present disclosure further provides a computer program product, including a computer program, where the computer program, when executed by a processor, implements the method described in any one of above embodiments.

It should be pointed out that according to needs of implementations, the components/steps described in the embodiments of this application may be split into more components/steps, and two or more components/steps or part operations of the components/steps may be combined to form new components/steps to implement the purpose of the embodiments of this application.

The above methods according to the embodiments of this application may be implemented in hardware and firmware or may be implemented as software or computer codes capable of being stored in recording media (such as CD ROM, RAM, floppy disk, hard disc or photomagnetic disk) or may be implemented as computer codes that are downloaded through a network and originally stored in remote recording medium or non-transient machine readable media and are stored in local recording media, so that the method described here may be processed by such software stored in the recording media using a general-purpose computer, an application specific processor or programmable or special hardware (such as ASIC or FPGA). It can be understood that the computer, the processor, the microprocessor controller or the programmable hardware includes storage assemblies (for example, RAM, ROM, flash memory, and the like) capable of storing or receiving software or computer codes. When accessed and executed by the computer, the processor or the hardware, the software or computer codes implement a method for modulating a frequency converter described here. Besides, when the general-purpose computer accesses the code of the method for detecting the target shown herein, execution of the code converts the general-purpose computer into the special computer for executing the method for detecting the target shown herein.

It should be further noted that the terms "include," "comprise," or any other variants thereof are intended to cover a non-exclusive inclusion, so that a process, a method, a product, or a device including a series of elements not only includes such elements, but also includes other elements not expressly listed, or further includes elements inherent to such a process, method, product, or device. Unless otherwise specified, an element limited by "including a/an..." does not exclude other same elements existing in the process, the method, the product, or the device that includes the element.

A person of ordinary skill in the art may notice that the exemplary units and method steps described with reference to the embodiments disclosed in this specification may be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of the embodiments of this application.

The embodiments of this specification are all described in a progressive manner, for same or similar parts in the embodiments, reference is made to these embodiments, and descriptions of each embodiment focus on a difference from other embodiments. Especially, a system embodiment is basically similar to a method embodiment, and therefore is described briefly; for related parts, reference may be made to partial descriptions in the method embodiment.

The above embodiments are merely used for explaining the embodiments of this application, rather than limiting the embodiments of this application. A person of ordinary skill in the art may also make various changes and variations without departing from the spirit and scope of the embodiments of this application. Therefore, all equivalent technical solutions also fall within the scope of the embodiments of this application. The scope of patent protection of the embodiments of this application shall be defined by claims.

Independent of the grammatical term usage, individuals with male, female or other gender identities are included within the term.

## Claims

1. A method for detecting a target object, comprising:
acquiring a target image and a first global point cloud of the target object based on a picture of the target object (S102);
detecting, by using a predetermined detection model, at least one first key region from the target image (S104);
acquiring first regional point clouds respectively corresponding to the at least one first key region from the first global point cloud (S106);
determining, respectively, coordinates of respective midpoints in the at least one first key region based on the first regional point clouds (S108);
calculating a first transformation matrix based on coordinates of each of the midpoints and coordinates of reference midpoints, wherein the reference midpoints are respective midpoints in reference key regions respectively corresponding to the at least one first key region in a reference image of a predetermined reference object (S110);
transforming, by using the first transformation matrix, the first global point cloud to obtain a second global point cloud (S112);
determining at least one second key region respectively corresponding to the at least one first key region from the second global point cloud (S114);
determining coordinates of respective midpoints and second sub point clouds in the at least one second key region (S116);
calculating a second transformation matrix based on reference point clouds and the second sub point clouds, wherein the reference point clouds are reference point clouds of the predetermined reference object (S118);
calculating a third transformation matrix based on the second transformation matrix and the first transformation matrix (S120); and
determining pose information of a robot grabbing the target object based on reference pose information of the predetermined reference object and the third transformation matrix (S122).

2. The method according to claim 1, wherein prior to executing the step of acquiring an image and a first global point cloud of the target object based on a picture of the target object (S102), the method further comprises: a step of determining reference information of the reference object, wherein the reference information comprises: the coordinates of the respective reference midpoints in the reference key region, the reference point clouds, and the reference pose information, the step of determining the reference information of the reference object comprising:
acquiring a reference picture of the reference object, and acquiring a reference image and a reference global point cloud of the reference object based on the reference picture (S1011);
detecting, by using the predetermined detection model, at least one reference key region from the reference image (S1012);
acquiring reference regional point clouds respectively corresponding to the at least one reference key region from the reference global point cloud (S1013);
respectively determining coordinates of respective reference midpoints in the at least one reference key region based on the reference regional point cloud (S1014);
determining the reference point clouds based on the coordinates of the reference midpoints (S1015); and
dragging the robot to a pose in which the robot is capable of grabbing the reference object to record information of the current pose as the reference pose information (S1016).

3. The method according to claim 2, wherein the determining the reference point clouds based on the coordinates of the reference midpoints (S1015) comprises:
setting a first radius r1 and a second radius r2 as required, wherein the first radius r1 is less than the second radius r2; and
by taking each of the reference midpoints as a center of a circle, determining all points between a circle taking the first radius r1 as a radius and a circle taking the second radius r2 as a radius and the reference midpoint to be the reference point clouds corresponding to the reference midpoint.

4. The method according to claim 1, wherein prior to executing the step of acquiring an image and a first global point cloud of the target object based on a picture of the target object (S102), the method further comprises: a training process where training is performed to obtain the detection model, the training process comprising:
receiving the image of the object as a training sample;
segmenting the image into a plurality of patches with a fixed size, and adding location embedding to each of the patch;
inputting the patches into a Transformer encoder for training, wherein the Transformer encoder is based on a self-attention mechanism with a sliding window;
inputting an output result to an MLP for calculating; and
generating masks of the key regions of the object and corresponding classifications.

5. The method according to claim 4, wherein in the self-attention mechanism with the sliding window, in a case where a feature length is n, a window size is set to n/2 and a step length is adjusted to n/4.

6. The method according to any one of claims 1 to 5, wherein the calculating a second transformation matrix based on reference point clouds and the second sub point clouds comprises: calculating, by using a 4PCS algorithm or a 4PCS-based morphing algorithm, the second transformation matrix that is transformed between the second sub point clouds and the reference point clouds.

7. The method according to any one of claims 1 to 5, wherein the third transformation matrix is equal to the second transformation matrix multiplied by the first transformation matrix.

8. The method according to any one of claims 1 to 5, wherein the second pose information is equal to the third transformation matrix multiplied by the reference pose information.

9. An apparatus (700) for detecting a target object, comprising:
a target image and point cloud acquisition unit (702), configured to acquire a target image and a first global point cloud of the target object based on a picture of the target object;
a first key region detection unit (704), configured to detect, by using a predetermined detection model, at least one first key region from the target image;
a first regional point cloud acquisition unit (706), configured to acquire first regional point clouds respectively corresponding to the at least one first key region from the first global point cloud;
a first midpoint coordinate calculation unit (708), configured to respectively calculate coordinates of respective midpoints in the at least one first key region based on the first regional point clouds;
a first transformation matrix calculation unit (710), configured to calculate a first transformation matrix based on coordinates of each of the midpoints and coordinates of reference midpoints, wherein the reference midpoints are respective midpoints in reference key regions respectively corresponding to the at least one first key region in a reference image of a predetermined reference object;
a second global point cloud acquisition unit (712), configured to transform, by using the first transformation matrix, the first global point cloud to obtain a second global point cloud;
a second key region detection unit (714), configured to determine at least one second key region respectively corresponding to the at least one first key region from the second global point cloud;
a second coordinate and point cloud determination unit (716), configured to determine coordinates of respective midpoints and second sub point clouds in the at least one second key region;
a second transformation matrix calculation unit (718), configured to calculate a second transformation matrix based on reference point clouds and the second sub point clouds, wherein the reference point clouds are reference point clouds of the predetermined reference object;
a third transformation matrix calculation unit (720), configured to calculate a third transformation matrix based on the second transformation matrix and the first transformation matrix; and
a pose determination unit (722), configured to determine pose information of a robot grabbing the target object based on reference pose information of the predetermined reference object and the third transformation matrix.

10. A computing device (800), comprising:
at least one processor (802); and
a memory (804) coupled to the at least one processor (802), wherein the memory is configured to store instructions which, when executed by the at least one processor (802), cause the at least one processor (802) to execute the method according to any one of claims 1 to 8.

11. A computer storage medium, having a computer program stored thereon, wherein the computer program, when executed by a processor, implements the method according to any one of claims 1 to 8.

12. A computer program product, comprising a computer program, wherein the computer program, when executed by a processor, implements the method according to any one of claims 1 to 8.
